# EUROPEAN PATENT SPECIFICATION

(11) **EP 3 611 778 B1**
(45) Date of publication and mention of the grant of the patent: **23.08.2023**
(21) Application number: 18784036.8
(22) Date of filing: 05.04.2018
(51) Int. Cl.: H01M 50/20, H01M 50/528

(54) **BATTERY MODULE AND ELECTRICITY STORAGE UNIT**
BATTERIEMODUL UND STROMSPEICHEREINHEIT
MODULE DE BATTERIE ET UNITÉ DE STOCKAGE D'ÉLECTRICITÉ

(30) Priority: 12.04.2017 JP 2017079209
(43) Date of publication of application: 19.02.2020
(73) Proprietor: Panasonic Intellectual Property Management Co., Ltd., Osaka-shi, Osaka 540-6207 (JP)
(72) Inventor: TOYA Shoichi, Osaka-shi, Osaka 540-6207 (JP); NAKASHIMA Takeshi, Osaka-shi, Osaka 540-6207 (JP); GUO Quanzeng, Osaka-shi, Osaka 540-6207 (JP)
(74) Representative: Müller-Boré & Partner Patentanwälte PartG mbB
(86) International application number: PCT/JP2018/014512
(87) International publication number: WO 2018/190235

(56) References cited:
- WO-A1-2014/045855
- WO-A1-2016/105168
- WO-A1-2016/204470
- WO-A1-2016/204470
- JP-A- 2010 123 412
- JP-A- 2010 123 412
- JP-U- 3 169 685
- US-A1- 2015 221 909

## Description

### TECHNICAL FIELD

The present invention relates to a battery module including multiple cells laminated on one another and an electricity storage unit including the battery module.

### BACKGROUND ART

Patent Literature (PTL) 1 discloses a battery pack including a battery stack having multiple battery cells (cells) laminated on one another.

### Citation List

### Patent Literature

PTL 1: Japanese Unexamined Patent Application Publication No. 2014-138483.

WO 2016/204470 A1 describes a cartridge that is suitable for sensing voltages of battery cells through a central area and an edge, wherein two battery cells are respectively located in an upper part and in a lower part thereof in order to increase energy density; and a battery module having the same. The cartridge according to the present invention comprises: a mount frame having a pair of through-windows positioned successively along the length direction, lower sliding boards positioned successively along the width direction between the pair of through-windows, a lead mounting board and upper sliding boards; and cooling fins for respectively covering the pair of through-windows, wherein the lower sliding board and the upper sliding board are respectively positioned on the left side and the right side of the lead mounting board, and diagonally face one another.

US 2015/221909 A1 describes a battery pack comprising a battery module made by stacking film-covered batteries with positive- and negative-electrode pull-out tabs being taken out from the same side. A plurality of battery modules are disposed in such a way that, in end surfaces of the battery modules, the sides of film-covered batteries from which positive- and negative-electrode pull-out tabs are pulled out face each other, and the battery modules are electrically connected together with an insulation member disposed between the modules. Side surfaces adjacent to the sides of film-covered batteries from which the positive- and negative-electrode pull-out tabs are pulled out are reinforced by a common reinforcing member.

JP 2010 123412 A describes a battery pack including battery modules each equipped with a plurality of battery cells electrically connected with each other to constitute a single complex battery and a case wrapping up the battery cells in bulk, and a retaining member for fixing and retaining the battery modules. Each case of the battery module includes a protrusion on a face with a middle-size area among rectangular outer faces, and the protrusion is formed elongated in a direction along the longest edge side of the rectangular contour so as a shape of the cross section crossing that direction to be nearly constant, and the shape of the cross section includes a site, as a width spread in a direction parallel with the face having the middle-size area of the case, with a larger width at a side farther away from the face with the middle-size area than at a nearer side, while, the retaining member includes recess parts corresponding to the protrusions of the battery modules.

### SUMMARY OF THE INVENTION

### TECHNICAL PROBLEM

The technique in PTL 1 is, however, not capable of effectively limiting misalignment of the cells.

Accordingly, the present invention provides a battery module capable of effectively limiting misalignment of the laminated cells.

### SOLUTIONS TO PROBLEM

The invention is defined by the independent claims, while preferred embodiments form the subject of the dependent claims.

A battery module according to an aspect of the present invention includes a battery stack including cells that are tabular and laminated on one another; and a module reinforcement plate that is metallic and disposed in at least a position, included in positions that cover a plurality of outer surfaces excluding a pair of first outer surfaces at both outer sides along a lamination direction of the battery stack, that substantially covers an entirety of a second outer surface having a maximum area.

An electricity storage unit according to an aspect of the present invention includes the battery module; and a placement surface on which the battery module is placed.

### ADVANTAGEOUS EFFECT OF INVENTION

The battery module of the present invention makes it possible to effectively limit misalignment of the laminated cells.

### BRIEF DESCRIPTION OF DRAWINGS

FIG. 1 is a perspective view of an example of an exterior of a battery module according to an embodiment.
FIG. 2 is an exploded perspective view of an exterior body of the battery module.
FIG. 3 is an exploded perspective view for describing a battery stack.
FIG. 4 is an exploded perspective view of an example of a configuration of a cell and a tabular tray that form one unit of a laminate of the battery stack.
FIG. 5 is a diagram for describing a process in which each electrode terminal on a plate is bent.
FIG. 6 is a diagram for describing a process in which two plates are laminated on each other.
FIG. 7 is a diagram for describing a placement position of a connection unit on the battery stack.
FIG. 8 is a diagram for describing a configuration of the connection unit.
FIG. 9 is a diagram for describing a process in which electrode terminals of the cells are connected.
FIG. 10 is a schematic view for describing electrical connections of the battery module.
FIG. 11 is a perspective view of an example of a configuration of an electricity storage unit including the battery module.
FIG. 12 is diagram of an example of an exterior of a battery module according to Variation 1.

### DESCRIPTION OF EXEMPLARY EMBODIMENT

Hereinafter, a battery module according to an embodiment will be described with reference to the drawings. Note that each of the embodiments described below shows a comprehensive or specific example in the present invention. Numerical values, shapes, materials, components, placement and connection of the components, steps and their order, and the like are mere examples and are not intended to limit the present invention. Components in the following embodiments not mentioned in any of the independent claims that define the broadest concepts are described as optional elements.

Note that the drawings are schematic diagrams and do not necessarily provide strictly accurate illustrations. In the drawings, components that are substantially the same as components described previous thereto have the same reference numerals and overlapping descriptions may be omitted or simplified.

### EMBODIMENT

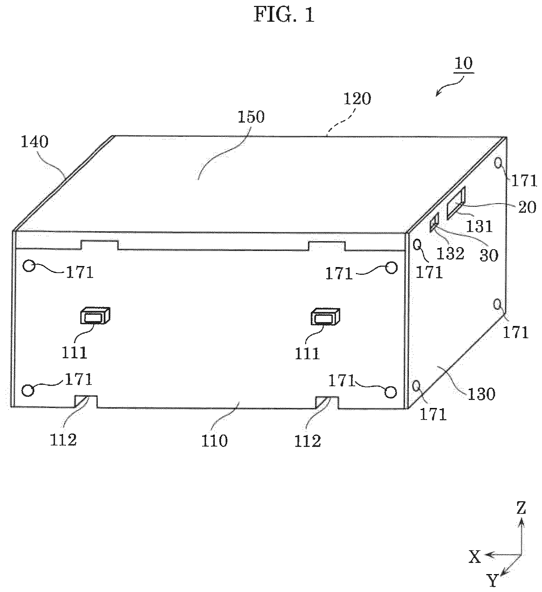

Hereinafter, the embodiment will be described with reference to FIG. 1 to FIG. 11.

### 1. Configuration

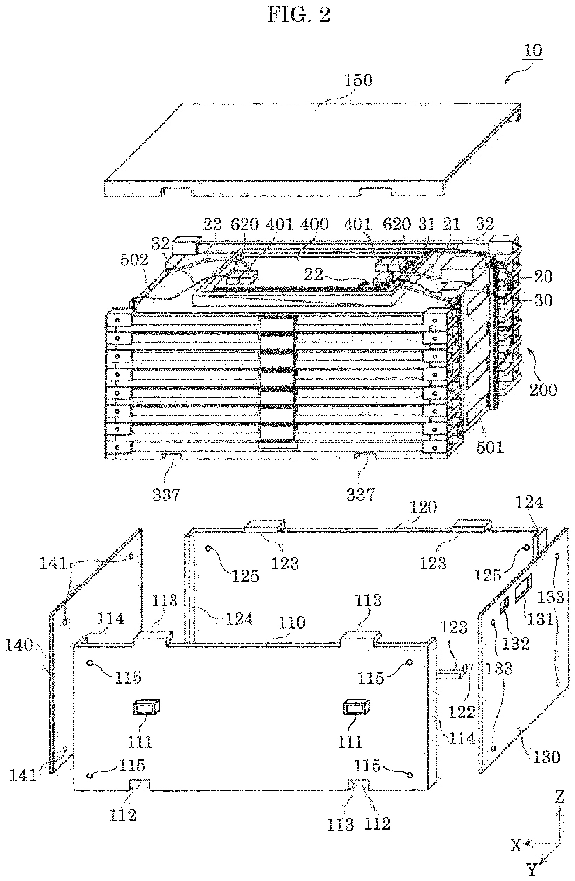

FIG. 1 is a perspective view of an example of an exterior of a battery module according to the embodiment. FIG. 2 is an exploded perspective view of an exterior body of the battery module.

Note that in these and subsequent drawings, the Y-axis is the front-back direction, the positive end of the Y-axis (front end of arrow) is the front side, and the negative end of the Y-axis (rear end of arrow) is the rear side for the sake of description. The Z-axis is the top-bottom direction, the positive end of the Z-axis (front end of arrow) is the upper side, and the negative end of the Z-axis (rear end of arrow) is the lower side. The X-axis is defined by applying the Y-axis and the Z-axis as defined above to a right-handed coordinate system. In other words, a direction perpendicular to the Y-axis and the Z-axis (left-right direction) is the Y-axis, the positive end of the X-axis (front end of arrow) is the left side, and the negative end of the X-axis (rear end of arrow) is the right side.

As illustrated in FIG. 1 and FIG. 2, battery module 10 includes first module reinforcement plates 110 and 120, and battery stack 200. Battery module 10 may further include second module reinforcement plates 130 and 140, cover 150, circuit board 400, external terminal 20, and communication terminal 30. Battery stack 200 is, for example, a hexahedron.

First module reinforcement plate 110 is a metallic, tabular component disposed at the positive end of the Y-axis of battery module 10. First module reinforcement plate 110 is disposed in at least a position, included in positions that cover a plurality of outer surfaces (plurality of lateral surfaces) excluding a pair of outer surfaces (upper surface and lower surface) at both outer sides along a lamination direction of battery stack 200, that substantially covers an entirety of a outer surface (in the present embodiment, outer surface at the positive end of the Y-axis) having a maximum area. Plurality of outer surfaces excluding a pair of outer surfaces at both outer sides along a lamination direction of battery stack 200 here means a plurality of lateral surfaces that intersect (in the present embodiment, are orthogonal) with the upper surface and lower surfaces that are the pair of outer surfaces. Note that first module reinforcement plate 110 does not strictly need to cover the entirety of the outer surface of battery stack 200 at the positive end of the Y-axis, and may also, for example, expose a portion of at most 10% of the entire surface. First module reinforcement plate 110 is substantially rectangular in a plan view.

First module reinforcement plate 110 may include protrusions 111 protruding toward the positive end of the Y-axis. Two protrusions 111 are disposed along the X-axis and are, for example, substantially cuboid. Protrusion 111 may be a portion formed by performing a stamping treatment on the metallic, tabular component being first module reinforcement plate 110. In other words, a side opposite to protrusions 111 (negative end of Y-axis) may include recesses corresponding to the shape of each protrusion 111. Protrusions 111 are not limited to being two protrusions, but may also be one protrusion and may also be at least three protrusions.

First module reinforcement plate 110 may have two cutouts 112 in a lower end thereof. The two cutouts 112 are rectangular and are disposed along the X-axis.

First module reinforcement plate 110 may include three hooks 113 extending from an upper end and the lower end thereof toward the negative end of the Y-axis. Hooks 113 include a portion facing a surface of battery stack 200 at the positive end of the Z-axis and a portion facing a surface of battery stack 200 at the negative end of the Z-axis. Note that hooks 113 may be hooked to at least one of the surface of battery stack 200 at the positive end of the Z-axis and the surface of battery stack 200 at the negative end of the Z-axis, and may be at least one hook. Since hooks 113 are disposed on at least a portion of each length of first module reinforcement plate 110 along the X-axis, it is possible to improve stiffness with respect to stress along the X-axis.

First module reinforcement plate 110 may include two hooks 114 extending from a right end and a left end thereof toward the negative end of the Y-axis. Hooks 114 include a portion facing a surface of battery stack 200 at the positive end of the X-axis and a portion facing a surface of battery stack 200 at the negative end of the X-axis. Hooks 114 are disposed across each width of first module reinforcement plate 110 along the Z-axis. This makes it possible to improve stiffness of first module reinforcement plate 110 with respect to stress along the Z-axis.

First module reinforcement plate 110 has four through-holes 115 at four corners and along a thickness thereof. As illustrated in FIG. 1, first module reinforcement plate 110 is fixed to battery stack 200 by fasteners 171, e.g. screws, being fixed to battery stack 200 in a state in which fasteners 171 pass through the four through-holes 115.

First module reinforcement plate 120 is a metallic, tabular component disposed at the negative end of the Y-axis of battery module 10. First module reinforcement plate 120 faces first module reinforcement plate 110 and substantially covers an entirety of an outer surface of battery stack 200 at the negative end of the Y-axis. Note that first module reinforcement plate 110 corresponds to a first reinforcement plate and first module reinforcement plate 120 corresponds to a second reinforcement plate. First module reinforcement plate 120 differs from first module reinforcement plate 110 in that first module reinforcement plate 120 is disposed on the other side of battery stack 200 and does not include protrusions 111. In other words, first module reinforcement plate 120 includes cutouts 122, hooks 123 and 124, and through-holes 125. This configuration corresponds respectively to cutouts 112, hooks 113 and 114, and through-holes 115 of first module reinforcement plate 110. Accordingly, detailed description of first module reinforcement plate 120 is omitted.

Second module reinforcement plate 130 is a metallic, tabular component disposed at the negative end of the X-axis of battery module 10. Second module reinforcement plate 130 covers an outer surface of battery stack 200 at the negative end of the X-axis. The outer surface at the negative end of the X-axis is, among lateral surfaces of battery stack 200, a lateral surface without a maximum area. Second module reinforcement plate 130 is a rectangular, tabular component, and has opening 131 exposing input-output terminal 401, opening 132 exposing communication terminal 30, and through-holes 133. As illustrated in FIG. 1, second module reinforcement plate 130 is fixed to battery stack 200 by fasteners 171, e.g. screws, being fixed to battery stack 200 in a state in which fasteners 171 pass through the four through-holes 133.

Second module reinforcement plate 140 is a metallic, tabular component disposed at the positive end of the X-axis of battery module 10. Second module reinforcement plate 140 faces second module reinforcement plate 130 and covers an outer surface of battery stack 200 at the positive end of the X-axis. The outer surface at the positive end of the X-axis is, among the lateral surfaces of battery stack 200, a lateral surface without a maximum area. Second module reinforcement plate 140 is a rectangular, tabular component and has through-holes 141. Similar to second module reinforcement plate 130, second module reinforcement plate 140 is fixed to battery stack 200 by fasteners 171, e.g. screws, being fixed to battery stack 200 in a state in which fasteners 171 pass through the four through-holes 141.

Cover 150 is disposed at the positive end of the Z-axis of battery module 10, and is a metallic, tabular component. Cover 150 covers circuit board 400 disposed at the positive end of the Z-axis of battery stack 200. Cover 150 is substantially rectangular in the plan view.

In this manner, first module reinforcement plates 110 and 120, and second module reinforcement plates 130 and 140 are disposed in positions that cover the plurality of outer surfaces (plurality of lateral surfaces) excluding the pair of outer surfaces (upper surface and lower surface) at both outer sides along the lamination direction of battery stack 200. In other words, first module reinforcement plates 110 and 120 and second module reinforcement plates 130 and 140 do not need to cover the outer surfaces of battery stack 200 at either end of the Z-axis.

Battery stack 200 includes the tabular cells 220 laminated on one another. A configuration of battery stack 200 will be described in more detail later.

Circuit board 400 is disposed on tabular tray 320 that is a tabular component covering the upper surface of battery stack 200. Tabular tray 320 is disposed on the upper surface side of battery stack 200. Circuit board 400 includes a control circuit that controls an output of electric power stored in battery stack 200, performs charge control of battery stack 200, etc. To be specific, circuit board 400 includes input-output terminal 401 that is electrically connected to the electrode terminal of each cell 220. Input-output terminal 401 is electrically connected to the electrode terminal of each cell 220 in order to obtain an intermediate potential of battery stack 200.

External terminal 20 is a terminal for outputting the electric power (discharge) stored in battery stack 200, inputting external electric power (charge) to battery stack 200, etc. In other words, external terminal 20 is connected to an external device to be a load, or connected to a device, system power supply, etc. that outputs electric power of a power generator, etc. External terminal 20 is electrically connected to circuit board 400 by power line 21, and is electrically connected, via circuit board 400, to (i) a positive electrode terminal of the cell located at an end portion of battery stack 200 near its positive electrode (hereinafter referred to as "positive electrode terminal of battery stack 200") and (ii) a negative electrode terminal of the cell located at an end portion of battery stack 200 near its negative electrode (hereinafter referred to as "negative electrode terminal of battery stack 200"). Circuit board 400 is electrically connected to the positive electrode terminal of battery stack 200 with positive electrode power line 23 and to the negative electrode terminal of battery stack 200 with negative electrode power line 22. Note that external terminal 20 is electrically connected to the positive electrode terminal and the negative electrode terminal of battery stack 200 via circuit board 400, but is not limited thereto, and may also be directly electrically connected to the positive electrode terminal and the negative electrode terminal of battery stack 200 with each power line.

Communication terminal 30 is a terminal for obtaining a control signal from an external device, outputting a signal that indicates a state of battery module 10 to an external device, etc. Communication terminal 30 is electrically connected to circuit board 400 by communication line 31. Circuit board 400 obtains the control signal from the external device via communication terminal 30, outputs the signal that indicates the state of battery module 10 via communication terminal 30, etc.

Note that external terminal 20 and communication terminal 30 are disposed along the Y-axis on a surface at the negative end of the X-axis of battery module 10.

### 2. Detailed Configuration of Battery Stack

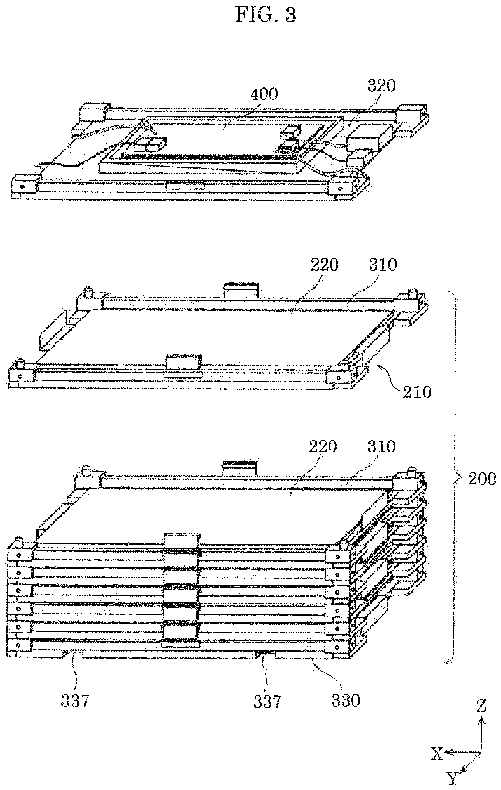

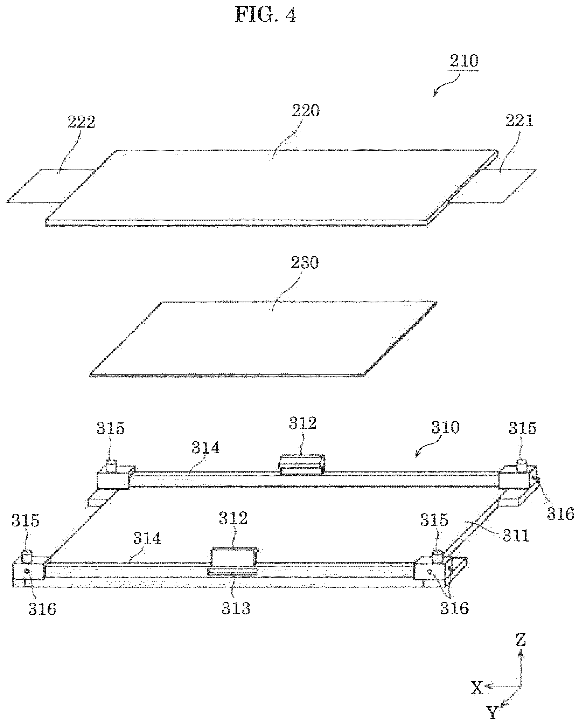

The configuration of battery stack 200 will be described next with reference to FIG. 3 and FIG. 4.

FIG. 3 is an exploded perspective view for describing the battery stack. FIG. 4 is an exploded perspective view of an example of a configuration of the cell and the tabular tray that form one unit of a laminate of the battery stack.

As illustrated in FIG. 3, battery stack 200 is an assembly of the tabular cells 220 laminated on one another. To be specific, battery stack 200 is an assembly of plate 210 as single unit that includes one cell 220 and tabular tray 310 to which the main surface of the one cell 220 is fixed. In other words, battery stack 200 is an assembly of cell 220 and tabular tray 310 being alternatingly laminated on each other. In battery stack 200, in two adjacent cells 220 among cells 220 laminated on one another, the positive electrode terminal of one cell 220 and the negative electrode terminal of another cell 220 are respectively electrically connected to each other by connection units 501 and 502.

As illustrated in FIG. 4, plate 210 includes, to be specific, cell 220, double-sided tape 230, and tabular tray 310.

An interior of cell 220 includes a power generation element in which a rectangular positive electrode, a separator, negative electrode, and separator are respectively and repeatedly laminated on one another. Cell 220 includes, for example, a laminate that covers an outer surface of the power generation element. In other words, an exterior body of cell 220 includes the laminate. Cell 220 includes positive electrode terminal 221 that is electrically connected to the positive electrode of the power generation element and exposed at the negative end of the X-axis, and negative electrode terminal 222 that is electrically connected to the negative electrode of the power generation element and exposed at the positive end of the X-axis. Positive electrode terminal 221 and negative electrode terminal 222 are metallic, tabular components.

In the present embodiment, cell 220 has a configuration in which positive electrode terminal 221 and negative electrode terminal 222 are exposed at opposite ends of the X-axis, but is not limited to this configuration, and may have a configuration in which the positive electrode terminal and the negative electrode terminal are exposed at the same side. The positive electrode terminal and the negative electrode terminal may also be disposed in overlapping positions in a top view when multiple cells are vertically stacked on one another. For example, cell 220 may have a configuration in which positive electrode terminals and negative electrode terminals are disposed in point-symmetric positions, so that the positive electrode terminal of one cell and the negative electrode terminal of another cell overlap and the negative electrode terminal of the one cell and the positive electrode terminal of the other cell overlap when the one cell and the other cell that is the one cell upside down are stacked on each other. This makes it possible to easily connect multiple cells in series.

Double-sided tape 230 is disposed between cell 220 and tabular tray 310, and fixes cell 220 to a predetermined position of tabular tray 310. Either side of double-sided tape 230 may be adhesive. Note that instead of double-sided tape 230, cell 220 may also be fixed to the predetermined position of tabular tray 310 using adhesive.

Tabular tray 310 includes tray body 311, connector 312, recess 313, partition 314, protrusion 315, and fixing hole 316.

Tray body 311 is a rectangular, tabular portion on which cell 220 is placed.

Connector 312 is disposed on either end of tray body 311 along the Y-axis, and includes two portions extending toward the positive end of the Z-axis. The two connectors 312 are hook-shaped portions protruding inward along the Y-axis, each having a distal end at the positive end of the Z-axis for hooking to the outer sides along the Y-axis.

Recess 313 is a portion into which the hook-shaped distal end of connector 312 and is recessed inward along the Y-axis. Recess 313 is, for example, formed at either end of the Y-axis, open facing in the direction of the Y-axis, and is a substantially cuboid hole with its length along the X-axis.

Detailed functionality of connector 312 and recess 313 will be described later.

Partition 314 is disposed at either end of tray body 311 along the Y-axis, protrudes toward the positive end of the Z-axis, and includes a pair of portions formed across the lengths of tray body 311 along the X-axis. An interval between the pair of partitions 314 corresponds to a width of cell 220 along the Y-axis, and is longer than the width of cell 220 along the Y-axis for only a predetermined clearance amount. Accordingly, it is possible to easily position the pair of partitions 314 on tabular tray 310 of cell 220 along the Y-axis.

Protrusion 315 is a portion that is disposed in each of four corners of tray body 311 and protrudes toward the positive end of the Z-axis. Protrusion 315 is, for example, columnar. Protrusions 315 engage with holes not illustrated that are formed in another tabular tray 310 disposed on tabular tray 310. In other words, protrusion 315 is inserted in a bottom of the other tabular tray 310. With this, tabular trays 310 are restricted in movement along the X-axis and the Y-axis when tabular trays 310 are stacked on one another.

Fixing hole 316 is disposed in each of the four corners of tabular tray 310, and is a hole in which fastener 171 is fixed at either end of the X-axis and either end of the Y-axis. In other words, fixing hole 316 is disposed in two surfaces of the outer side of the four corners. Fixing hole 316 includes, for example, a female screw into which a male screw formed on a distal end of fastener 171 is screwed.

As illustrated in FIG. 3, tabular tray 320, which has the same configuration as tabular tray 310, is disposed at the positive end of the Z-axis of battery stack 200. Tabular tray 320 corresponds to a tabular component. Circuit board 400 is disposed on tabular tray 320. Tabular tray 330 at the farthest negative end of the Z-axis of battery stack 200 differs from tabular tray 310 in that tabular tray 330 further includes grooves 337 on a bottom of tray body 311 thereof extending along the Y-axis. Any other configurational elements of tabular tray 330 are the same as configurational elements of tabular tray 310, and description thereof is omitted. Groove 337 is formed at two different positions along the X-axis on tray body 311 of tabular tray 330 and is formed across an entire span of the Y-axis of tray body 311. Groove 337 is disposed in a position overlapping cutouts 112 of first module reinforcement plate 110 along the Y-axis in a state in which first module reinforcement plate 110 is disposed at the positive end of the Y-axis.

First module reinforcement plates 110 and 120, and second module reinforcement plates 130 and 140 are fixed to tabular tray 320 disposed at the positive end of the Z-axis of battery stack 200, and tabular tray 330 disposed at the negative end of the Z-axis of battery stack 200. With this, first module reinforcement plates 110 and 120, and second module reinforcement plates 130 and 140 maintain plates 210 and tabular tray 320 of battery stack 200 in a laminated state.

As illustrated in FIG. 4, upon combining cell 220 and tabular tray 310, and forming plate 210, electrode terminals 221 and 222 of cell 220 are bent.

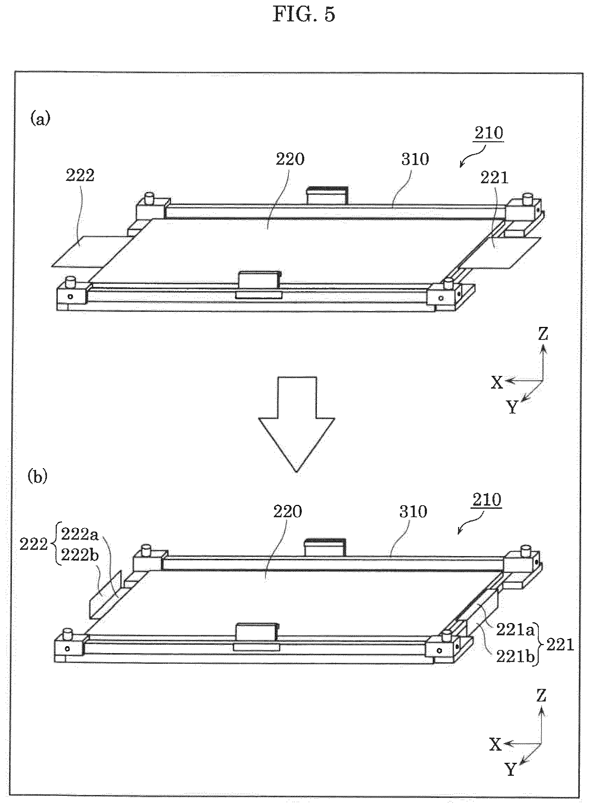

FIG. 5 is a diagram for describing a process in which each electrode terminal on the plate is bent. (a) of FIG. 5 is a perspective view of the plate before each of the electrode terminals are bent, and (b) of FIG. 5 is a perspective view of the plate after each of the electrode terminals are bent.

As illustrated in (b) of FIG. 5, positive electrode terminal 221 of cell 220 is bent as to point toward the negative end of the Z-axis, and negative electrode terminal 222 is bent as to point toward the positive end of the Z-axis opposite to positive electrode terminal 221.

With this, positive electrode terminal 221 and negative electrode terminal 222 respectively include first plates 221a and 222a that extend along the main surface of cell 220, and second plates 221b and 222b that extend substantially perpendicular to the main surface. A direction in which second plate 221b of positive electrode terminal 221 extends with respect to first plate 221a and a direction in which second plate 222b of negative electrode terminal 222 extends with respect to first plate 222a are opposite.

A process in which plates 210 are laminated on each other will be described next.

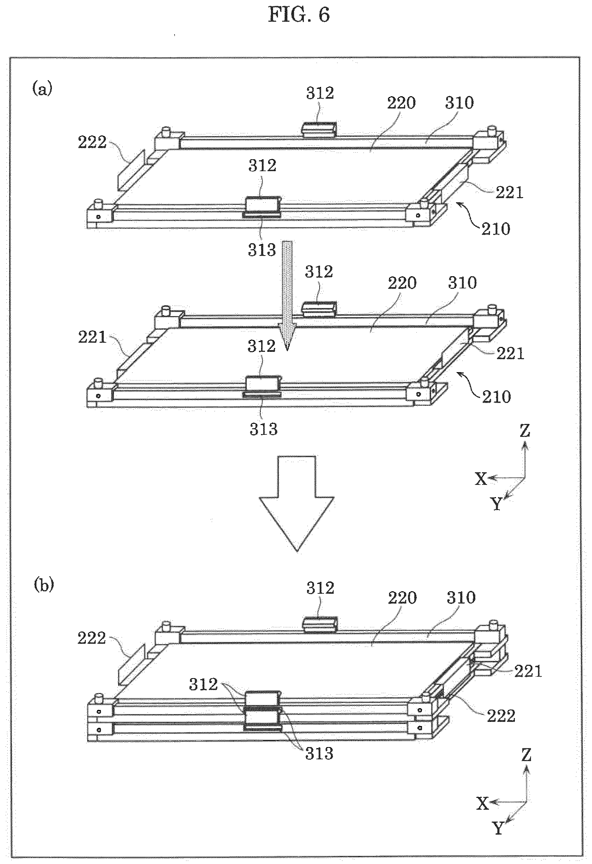

FIG. 6 is a diagram for describing the process in which two plates are laminated on each other. (a) of FIG. 6 is a perspective view of a state before the two plates are laminated on each other, and (b) of FIG. 6 is a perspective view of a state after the two plates have been laminated on each other.

As illustrated in (a) of FIG. 6, the two plates 210 are disposed so that positive electrode terminal 221 and negative electrode terminal 222 of each cell 220 face in different directions. To be specific, on plate 210 disposed on the upper side of the two plates 210, positive electrode terminal 221 is disposed at the negative end of the X-axis and negative electrode terminal 222 is disposed at the positive end of the X-axis. However, on plate 210 disposed on the lower side of the two plates 210, positive electrode terminal 221 is disposed at the positive end of the X-axis and negative electrode terminal 222 is disposed at the negative end of the X-axis.

As illustrated in (b) of FIG. 6, when the two plates 210 overlap each other in the above orientation, second plate 221b of positive electrode terminal 221 of the upper side plate 210 and second plate 222b of negative electrode terminal 222 of the lower side plate 210 overlap each other along the X-axis. The hook-shaped distal end of each of the two connectors 312 on tabular tray 310 hooks into recess 313 in the other tabular tray 310 disposed on tabular tray 310. With this, tabular trays 310 are restricted from moving away from one another along the Z-axis when tabular trays 310 are stacked on one another.

In the present embodiment, battery stack 200 is assembled by laminating seven plates 210 on one another so that two adjacent and overlapping plates 210 have the same configuration as above.

A configuration of connection units 501 and 502 that mutually connect each electrode terminal of the seven laminated plates 210 will be described next.

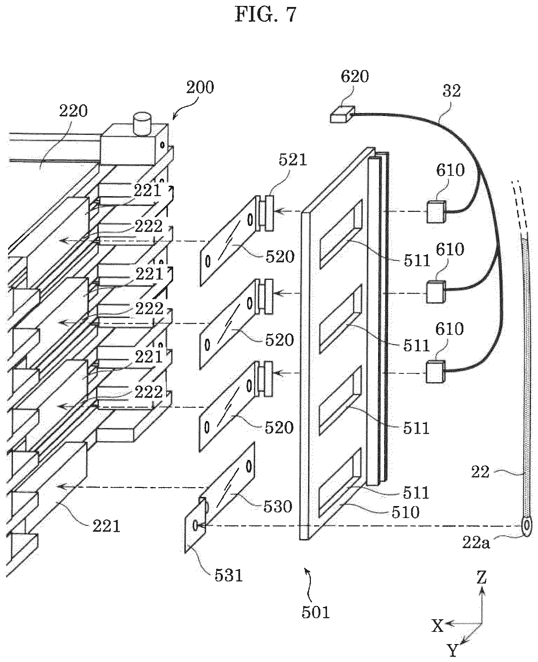

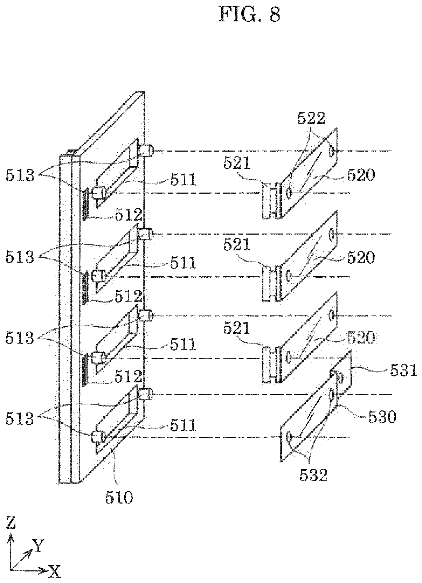

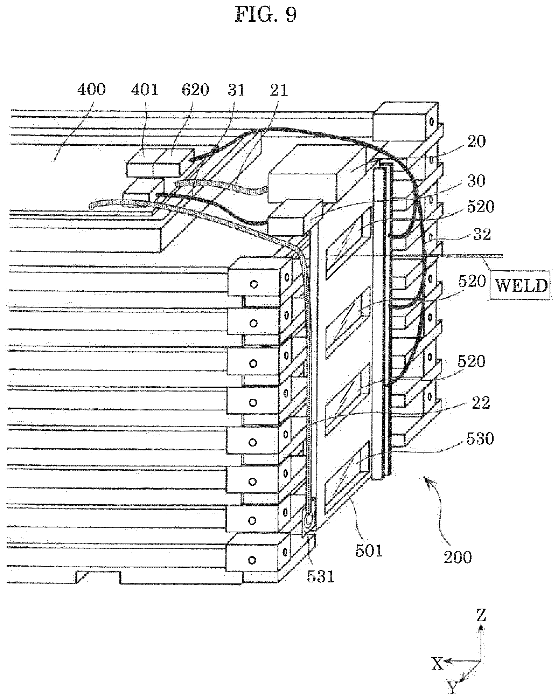

FIG. 7 is a diagram for describing a placement position of the connection unit on the battery stack. FIG. 8 is a diagram for describing the configuration of the connection unit. FIG. 9 is a diagram for describing a process in which the electrode terminals of the cells are connected.

As illustrated in FIG. 2, connection units 501 and 502 are disposed on sides of laminated plates 210 where electrode terminals 221 and 222 are exposed. To be specific, connection unit 501 is disposed at the negative end of X-axis of plates 210, and connection unit 502 is disposed at the positive end of the X-axis of plates 210. Since connection unit 501 and connection unit 502 have the same configuration, connection unit 501 disposed on the negative end of the X-axis of plate 210 will be described here.

As illustrated in FIG. 7 and FIG. 8, connection unit 501 includes placement plate 510 and metal plates 520 and 530.

Placement plate 510 is a substantially rectangular, tabular component and includes openings 511 and 512, and protrusions 513.

Openings 511 (four in the present embodiment) are rectangular with their length along the Y-axis, and are arranged along the Z-axis. Openings 511 are disposed at positions corresponding to electrode terminals 221 and 222 of the laminated plates 210. Openings 511 correspond in size to second plates 221b and 222b of electrode terminals 221 and 222.

Openings 512 (three in the present embodiment) are rectangular openings with their lengths along the Z-axis, and are slit-shaped openings disposed more toward the negative end of the Y-axis with respect to three openings 511 closer to the positive end of the Z-axis among openings 511. Openings 512 each have substantially the same width along the Z-axis as openings 511.

Protrusions 513 (eight in the present embodiment) are columnar portions disposed at either outer side of openings 511 along the Y-axis and protrude toward the X-axis. In other words, two protrusions 513 are disposed corresponding to each position on the Z-axis along which openings 511 are disposed.

Metal plates 520 are rectangular, metallic components with their lengths along the Y-axis. Metal plates 520 each include a metallic connector joint 521 that extends from an end portion thereof at the negative end of the Y-axis toward the negative end of the X-axis, and two through-holes 522 disposed at either end of each of metal plates 520 along the Y-axis. Metal plates 520 are disposed at positions corresponding to the three openings 511 in placement plate 510 closer to the positive end of Z-axis. With this, on each of metal plates 520, connector joint 521 passes through opening 512 of placement plate 510 and protrusions 513 pass through the two through-holes 522. As stated above, metal plates 520 cover the three corresponding openings 511 when metal plates 520 are disposed on placement plate 510.

Metal plate 530 is a rectangular, metallic component with its length along the Y-axis. Metal plate 530 includes terminal 531 that is bent in steps toward the negative end of the X-axis starting from an end portion thereof at the positive end of the Y-axis, and two through-holes 532 disposed on either end of metal plate 530 along the Y-axis. Metal plate 530 is disposed at a position that corresponds to opening 511 disposed at the farthest negative end of the Z-axis of placement plate 510. With this, on metal plate 530, terminal 531 is disposed at a position closer to the negative end of X-axis than placement plate 510, and protrusions 513 pass through the two through-holes 532. As stated above, metal plate 530 covers the corresponding opening 511 when metal plate 530 is disposed on placement plate 510.

As illustrated in FIG. 7, the laminated plates 210 include four portions at the negative end of the X-axis where electrode terminals 221 and 222 are exposed. Three portions closer to the positive end of the Z-axis among the four portions are each a combination of positive electrode terminal 221 and negative electrode terminal 222 that overlap each other along the X-axis due to plates 210 being laminated on one another. A portion closest to the negative end of the Z-axis among the four portions is only negative electrode terminal 222 that does not overlap positive electrode terminal 221.

As illustrated in FIG. 9, when attaching connection unit 501 to the laminated plates 210, metal plates 520 and 530 and each of electrode terminals 221 and 222 overlap one another along the X-axis since openings 511 and 512 of placement plate 510 are disposed at positions corresponding to each of electrode terminals 221 and 222 of the laminated plates 210. More specifically, metal plates 520 overlap, along the X-axis, the three portions closer to the positive end of the Z-axis among the four portions where electrode terminals 221 and 222 of plates 210 are exposed. Metal plate 530 overlaps, along the X-axis, the portion closest to the negative end of the Z-axis among the four portions where electrode terminals 221 and 222 of plates 210 are exposed. In other words, it is possible to dispose metal plates 520 and 530 lateral to the four portions where electrode terminals 221 and 222 are exposed by disposing connection unit 501 at the negative end of the X-axis of the laminated plates 210.

At the three portions closer to the positive end of the Z-axis, positive electrode terminals 221, negative electrode terminals 222, and metal plates 520 are mutually electrically connected by performing laser beam welding on metal plates 520. At the portion closest to the negative end of the Z-axis, negative electrode terminal 222 and metal plate 530 are mutually electrically connected by performing laser beam welding on metal plate 530. With this, in two cells 220 that are laminated adjacent to each other among the cells, second plate 221b of positive electrode terminal 221 on one cell 220 and second plate 222b of negative electrode terminal 222 on the other cell 220 are mutually connected.

Returning to FIG. 7, connector joint 521 of metal plates 520 is each electrically connected to a corresponding one of connectors 610 (three in the present embodiment). Connectors 610 are each electrically connected to connector 620 via communication line 32. Connector 620 is electrically connected to input-output terminal 401 disposed on circuit board 400.

In other words, connectors 610 are electrically connected to the portions where positive electrode terminals 221 and negative electrode terminals 222 of plates 210 overlap one another. Accordingly, circuit board 400 is capable of obtaining an intermediate potential of battery stack 200 via input-output terminal 401.

Tip 22a of negative electrode power line 22 is electrically connected to terminal 531 of metal plate 530.

Note that, as illustrated in FIG. 9, communication line 32 and negative electrode power line 22 are disposed along the Z-axis on either end of placement plate 510 along the Y-axis. In other words, communication line 32 and negative electrode power line 22 are disposed on opposite sides along the Y-axis and metal plates 520 and 530 are interposed therebetween. Accordingly, it is possible to reduce adverse effects of an electromagnetic field produced from negative electrode power line 22 on communication line 32 due to the electromagnetic field produced from negative electrode power line 22 being absorbed by metal plates 520 and 530.

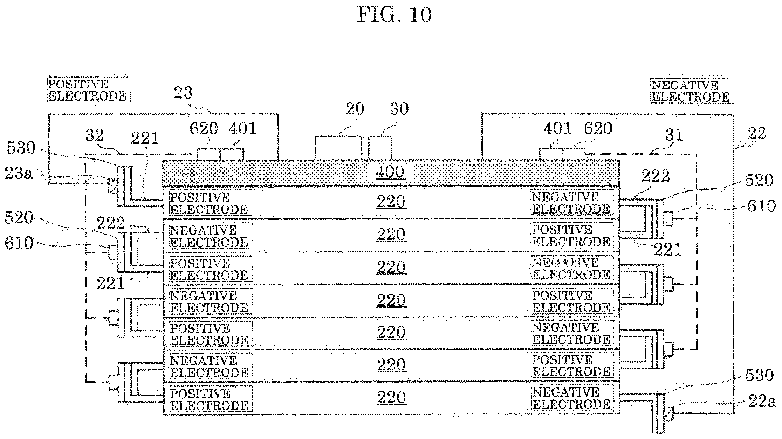

A configuration of an electric connection of battery stack 200 and circuit board 400 will be described with reference to FIG. 10.

FIG. 10 is a schematic view for describing the electrical connection of the battery module.

As illustrated in FIG. 10, the laminated plates 210 are laminated on one another so that the negative electrode and the positive electrode of each of cells 220 are laminated on one another alternatingly. On each of cells 220, a distal end of positive electrode terminal 221 is bent as to point upward, and a distal end of negative electrode terminal 222 is bent as to point downward. Accordingly, at the negative end of the X-axis, three portions where positive electrode terminal 221 and negative electrode terminal 222 overlap each other are disposed from the positive end of the Z-axis, and closest to the negative end of the Z-axis, only negative electrode terminal 222 is disposed. At the positive end of the X-axis, three portions where positive electrode terminal 221 and negative electrode terminal 222 overlap each other are disposed from the negative end of the Z-axis, and closes to the positive end of the Z-axis, only positive electrode terminal 221 is disposed. Cells 220 are connected in series due to the overlapping positive electrode terminals 221 and negative electrode terminals 222 being electrically connected in this state.

Note that at the positive end of the X-axis of battery stack 200, three portions where positive electrode terminal 221 and negative electrode terminal 222 overlap each other are disposed from the negative end of the Z-axis. Accordingly, connection unit 502 disposed at the positive end of the X-axis has a configuration that is the configuration of connection unit 501 with its Z-axis orientation upside down. As illustrated in FIG. 10, this makes it possible to dispose metal plates 520 and 530 at positions corresponding to electrode terminals 221 and 222 at the positive end of the X-axis of the laminated plates 210.

Connection unit 502, similar to connection unit 501, includes connectors 610 for obtaining the intermediate potential of the portions where positive electrode terminal 221 and negative electrode terminal 222 overlap each other, and is connected to circuit board 400 by communication line 32.

At the positive end of the X-axis, positive electrode terminal 221 disposed closest to the positive end of the Z-axis is electrically connected to tip 23a of positive electrode power line 23 via metal plate 530.

Returning to FIG. 2, first module reinforcement plates 110 and 120, and second module reinforcement plates 130 and 140 are fixed, with fasteners 171, to fixing holes 316 of (i) tabular tray 310 disposed closest to the positive end of the Z-axis of the laminated plates 210 and (ii) tabular tray 330 disposed closest to the negative end of the Z-axis. With this, the laminated plates 210 are restricted from moving away from one another along the Z-axis, and from being out of alignment along the X-axis and the Y-axis.

### 3. Configuration of Electricity Storage Unit

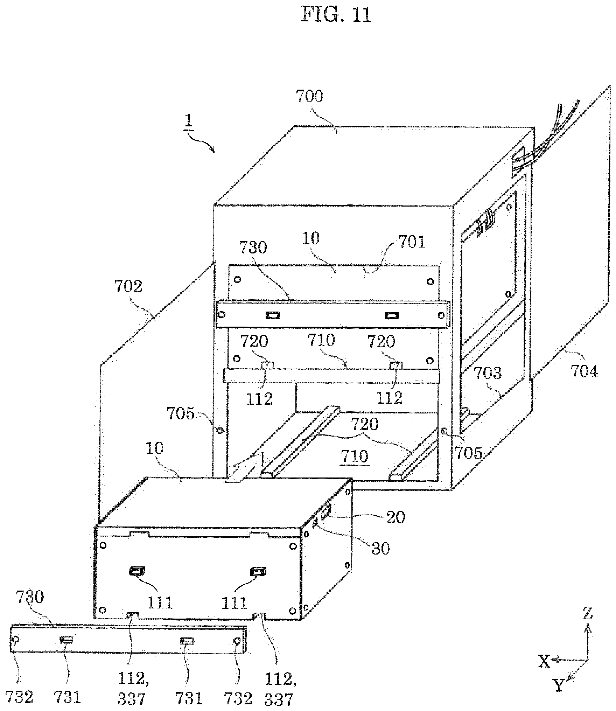

A configuration of electricity storage unit 1 will be described next with reference to FIG. 11.

FIG. 11 is a perspective view for describing the configuration of electricity storage unit 1.

Electricity storage unit 1 includes battery modules 10 (two in the present embodiment) and casing 700 that accommodates battery modules 10. Battery modules 10 each have the above-mentioned configuration.

Casing 700 includes opening 701 for accommodating battery module 10 in an inner space of casing 700, and door 702 that can cover and uncover opening 701. Casing 700 may also include opening 703 for performing wiring of battery module 10, and door 704 for covering and uncovering opening 703. Casing 700 includes placement surfaces 710 (two in the present embodiment) for placing battery modules 10 in the inner space of casing 700, and guides 720 that are formed on placement surfaces 710 and are ribs extending along the Y-axis. Guides 720 are disposed on placement surfaces 710 along the X-axis.

Cutouts 112 and grooves 337 in a bottom of battery module 10 are formed at positions corresponding to guides 720. In other words, battery modules 10 each include guides 720 corresponding to first guides, and cutouts 112 and grooves 337 that engage with guides 720 as second guides.

Accordingly, when placing battery modules 10 on placement surfaces 710, it is possible to make it easier for a user to place battery modules 10 on a predetermined position of each of placement surfaces 710 by pushing in battery modules 10 along the Y-axis in a state in which guides 720 and cutouts 112 and groove 337 engage with one another.

Note that the first guides formed on placement surfaces 710 are ribs, but may also be grooves extending along the Y-axis. When the first guides are grooves, the second guides are ribs that engage with the first guides in battery module.

Electricity storage unit 1 may further include module fixing plate 730 that fixes battery module 10 at a predetermined position on placement surface 710. Module fixing plate 730 is a rectangular, tabular component with its length along the X-axis that is longer along the X-axis than battery module 10. Module fixing plate 730 has two openings 731 into which the two protrusions 111 formed on first module reinforcement plate 110 of battery module 10 fit. In other words, the two protrusions 111 correspond to second fittings and the two openings 731 correspond to first fittings. Note that as long as module fixing plate 730 has a number of openings 731 corresponding to the number of protrusions 111, the number of openings 731 is not limited to two.

Module fixing plate 730 has two through-holes 732 that are each disposed on either end of the X-axis, and is fixed to casing 700 by fixing fasteners, which are not illustrated, to fixing holes 705 of casing 700 in a state in which the fasteners pass through module fixing plate 730. Module fixing plate 730 restricts movement of battery module 10 toward the positive end of the Y-axis by being fixed to casing 700 in the state in which battery module 10 is placed on placement surface 710 at the predetermined position.

### 4. Advantageous Effects, etc.

In the present embodiment, battery module 10 includes battery stack 200 and first module reinforcement plates 110 and 120. Battery stack 200 includes the tabular cells 220 laminated on one another. First module reinforcement plates 110 and 120 are metallic components disposed in at least a position, included in positions that cover the plurality of outer surfaces excluding the pair of first outer surfaces at both outer sides along the lamination direction of battery stack 200, that substantially covers an entirety of a second outer surface having a maximum area.

This enables first module reinforcement plates 110 and 120 to effectively limit mutual misalignment of cells 220 along crossing directions since first module reinforcement plates 110 and 120 are disposed on the outer surfaces having a maximum area among the outer surfaces that face in crossing directions perpendicular to the lamination direction of battery stack 200.

Battery module 10 according to the present embodiment further includes tabular tray 320. Tabular tray 320 covers an upper surface that is one surface of the pair of first outer surfaces. First module reinforcement plates 110 and 120 are fixed to tabular tray 320.

Accordingly, it is possible to effectively limit mutual misalignment of cells 220 along the crossing directions.

In battery module 10 according to the present embodiment, battery stack 200 is a laminate of a plurality of units each including one cell 220 and tabular trays 310 and 330 to which the main surface of the one cell 220 is fixed. First module reinforcement plates 110 and 120 are fixed to tabular tray 330 disposed on the other surface of the pair of first outer surfaces.

Accordingly, first module reinforcement plate 110 is capable of restricting cells 220 from moving away from one another along the lamination direction of battery stack 200.

Battery module 10 according to the present embodiment further includes circuit board 400 that is disposed on tabular tray 320 and includes input-output terminal 401 electrically connected to positive electrode terminal 221 and negative electrode terminal 222 that are electrode terminals of each of cells 220.

Accordingly, it is possible to acquire the intermediate potential of battery stack 200.

In battery module 10 according to the present embodiment, first module reinforcement plate 110 includes first module reinforcement plate 110 that covers the second outer surface, and first module reinforcement plate 120 that faces the second outer surface and substantially covers an entirety of a third outer surface of battery stack 200.

Accordingly, it is possible to more effectively limit mutual misalignment of cells 220 along the crossing directions.

In battery module 10 according to the present embodiment, first module reinforcement plates 110 and 120 respectively include hooks 113 and 123 that hook to at least one of the pair of first outer surfaces.

Accordingly, it is possible to more effectively limit cells 220 from moving away from another along the lamination direction. It is also possible to improve stiffness of first module reinforcement plate 110.

In the present embodiment, first module reinforcement plates 110 and 120 include a second guide that is groove 337 on an outer surface and extending in a predetermined direction, groove 337 fitting guides 720 that is a first rib formed on placement surfaces 710 on which battery module 10 is placed and extending in the predetermined direction.

Accordingly, when placing battery modules 10 on placement surfaces 710, it is possible to make it easier for the user to place battery modules 10 on the predetermined position of each of placement surfaces 710 by pushing in battery modules 10 along the Y-axis in a state in which guides 720 and cutouts 112 and groove 337 engage with one another.

In battery module 10 according to the present embodiment, each of cells 220 includes positive electrode terminal 221 and negative electrode terminal 222 having a different polarity from positive electrode terminal 221. Positive electrode terminal 221 and negative electrode terminal 222 on each of cell 220 respectively include first plates 221a and 222a that extend along the main surface of cell 220, and second plates 221b and 222b that extend substantially perpendicular to the main surface. The direction in which second plate 221b of positive electrode terminal 221 extends with respect to first plate 221a and the direction in which second plate 222b of negative electrode terminal 222 extends with respect to first plate 222a are opposite.

In a first cell and a second cell that are laminated adjacent to each other among cell 220, second plate 221b of positive electrode terminal 221 on the first cell and second plate 222b of negative electrode terminal 222 on the second cell are mutually connected.

Accordingly, it is possible to facilitate stacking on each other and electrically connecting second plate 221b of positive electrode terminal 221 of one cell 220 among two adjacent cells 220, and second plate 222b of negative electrode terminal 222 of another cell 220, when cells 220 are laminated on one another.

### VARIATON 1

In the above embodiment, first module reinforcement plates 110 and 120 included in battery module 10 do not have any through-holes aside from the four through-holes 115 for being fixed to battery stack 200, but are not limited thereto.

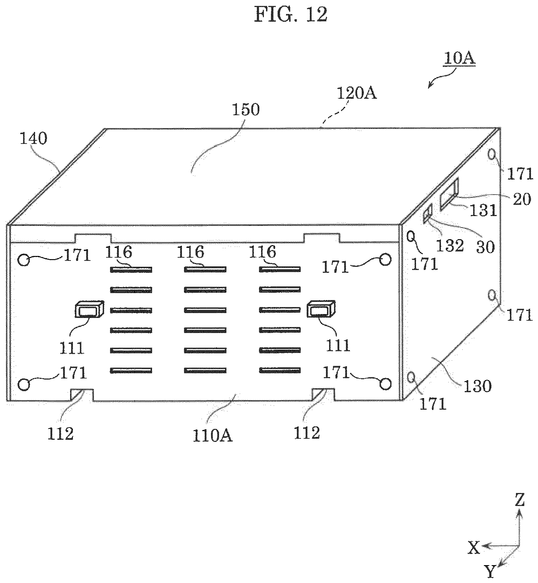

For example, as in battery module 10A shown in FIG. 12, first module reinforcement plate 110A having through-holes 116 in a region that overlaps a region in which cells 220 are disposed when seen along the Y-axis may also be used. In other words, first module reinforcement plate 110A may have through-holes 116 that partially expose the second outer surface that intersects the first outer surface facing the lamination direction of battery stack 200. In this case, first module reinforcement plate 120A disposed on the opposite side of battery stack 200 along the Y-axis may have the same configuration as first module reinforcement plate 110A. Note that FIG. 12 is a diagram showing an example of an exterior of the battery module according to Variation 1.

Note that through-holes 116 may also be disposed between cells 220 included in battery stack 200. In this case, it is easier for air to pass through an interior of battery module 10A and also easier to cool cells 220.

Through-holes 116 may also be disposed in positions overlapping cells 220 included in battery stack 200 when seen from the Y-axis. In this case, it is possible to reduce foreign substances exterior to battery module 10A from entering the interior of battery module 10A.

### VARIATON 2

Electricity storage unit 1 according to the above embodiment has a configuration in which the lamination direction of battery stack 200 is perpendicular to placement surfaces 710 of casing 700, but is not limited thereto, and the lamination direction may also be horizontal. For example, the first module reinforcement plate may also be a bottom surface of the battery module. In this case, the first module reinforcement plate may have grooves into which guides 720 disposed on placement surfaces 710 of casing 700 fit.

### VARIATON 3

In battery module 10 according to the above embodiment, tray body 311 of tabular tray 310 disposed between cells 220 may have openings for accommodating portions where cells 220 expand. In other words, tray body 311 may also support only a periphery of cell 220. Note that the openings do not need to pass all the way through tray body 311 and may also be recesses.

A battery module and electricity storage unit according to one or more aspects of the present invention have been described above based on the embodiment, but the present invention is not limited to the foregoing. Forms obtained by various combinations of the components in the different embodiments that can be conceived by a person skilled in the art which are within the scope of the essence of the present invention are also included in the scope of the one or more aspects of the present invention.

### REFERENCE MARKS IN THE DRAWINGS

- 1: Electricity storage unit
- 10, 10A: Battery module
- 110, 110A, 120, 120A: First module reinforcement plate
- 113, 114, 123, 124: Hook
- 130, 140: Second module reinforcement plate
- 200: Battery stack
- 220: Cell
- 221: Positive electrode terminal
- 221a: First plate
- 221b: Second plate
- 222: Negative electrode terminal
- 222a: First plate
- 222b: Second plate
- 310, 320, 330: Tabular tray
- 337: Groove
- 400: Circuit board
- 401: Input-output terminal
- 710: Placement surface
- 720: Guide
- 730: Module fixing plate

## Claims

1. A battery module (10, 10A), comprising:
a battery stack (200) including cells (220) that are tabular and laminated on one another; and
a module reinforcement plate (110, 120) that is metallic and disposed in at least a position that substantially covers an entirety of a second outer surface having a maximum area, the position being included in positions that cover a plurality of outer surfaces excluding a pair of first outer surfaces at both outer sides along a lamination direction of the battery stack (200),
wherein the module reinforcement plate (110, 120) includes a protrusion that engages with an opening formed on a module fixing plate (730) for fixing the battery module (10, 10A) in a predetermined position on a placement surface (710) on which the battery module (10, 10A) is placed.

2. The battery module (10, 10A) according to claim 1, further comprising:
a tabular component that covers one of the pair of first outer surfaces, wherein
the module reinforcement plate (110, 120) is fixed to the tabular component.

3. The battery module (10, 10A) according to claim 2, wherein
the battery stack (200) is a laminate of a plurality of units each including one of the cells (220) and a tabular tray (310, 320, 330) to which a main surface of the one of the cells (220) is fixed, and
the module reinforcement plate (110, 120) is fixed to the tabular tray (310, 320, 330) disposed at the other one of the pair of first outer surfaces.

4. The battery module (10, 10A) according to claim 2 or 3, further comprising:
a circuit board (400) that is disposed on the tabular component and includes an input-output terminal (401) electrically connected to an electrode terminal of each of the cells (220).

5. The battery module (10, 10A) according to any one of claims 1 to 4, wherein
the module reinforcement plate (110, 120) includes a first reinforcement plate (110) that covers the second outer surface, and a second reinforcement plate (120) that faces the second outer surface and substantially covers an entirety of a third outer surface of the battery stack (200).

6. The battery module (10, 10A) according to any one of claims 1 to 5, wherein
the module reinforcement plate (110, 120) includes a hook (113, 123) that hooks to at least one of the pair of first outer surfaces.

7. The battery module (10, 10A) according to any one of claims 1 to 6, wherein
the module reinforcement plate (110, 120) includes a plurality of through-holes that expose portions of the second outer surface of the battery stack (200).

8. The battery module (10, 10A) according to any one of claims 1 to 7, wherein
the module reinforcement plate (110, 120) includes a second guide that is a second groove (112) in or a second protrusion on an outer surface and extending in a predetermined direction, the second groove (112) or the second protrusion fitting a first guide (720) that is a first rib or a first groove formed on the placement surface (710) and extending in the predetermined direction.

9. The battery module (10, 10A) according to any one of claims 1 to 8, wherein
each of the cells (220) includes a first terminal and a second terminal having a different polarity from the first terminal,
the first terminal and the second terminal on each of the cells (220) each include a first plate (221a, 222a) that extends along the main surface of a corresponding one of the cells (220), and a second plate (221b, 222b) that extends substantially perpendicular to the main surface, and
a direction in which the second plate (221b) of the first terminal extends with respect to the first plate (221a) of the first terminal and a direction in which the second plate (222b) of the second terminal extends with respect to the first plate (222a) of the second terminal are opposite.

10. The battery module (10, 10A) according to claim 9, wherein
in a first cell (220) and a second cell (220) that are laminated adjacent to each other among the cells (220), the second plate of the first terminal on the first cell (220) and the second plate of the second terminal on the second cell (220) are mutually connected.

11. An electricity storage unit (1), comprising:
the battery module (10, 10A) according to any one of claims 1 to 10; and
a placement surface (710) on which the battery module (10, 10A) is placed.

12. The electricity storage unit (1) according to claim 11, wherein
the battery module (10, 10A) is the battery module (10, 10A) according to claim 8, and
the placement surface (710) includes a guide (720).

13. The electricity storage unit (1) according to claim 11 or 12, wherein
the electricity storage unit (1) further comprises the module fixing plate (730).

## Patentansprüche

1. Batteriemodul (10, 10A), aufweisend:
einen Batteriestapel (200), der Zellen (220) aufweist, die tafelförmig und aufeinander laminiert sind; und
eine Modulverstärkungsplatte (110, 120), die metallisch ist und in mindestens einer Position angeordnet ist, die im Wesentlichen eine gesamte zweite Außenfläche mit einem maximalen Bereich bedeckt, wobei die Position in Positionen enthalten ist, die eine Vielzahl von Außenflächen mit Ausnahme eines Paars erster Außenflächen auf beiden Außenseiten entlang einer Laminierungsrichtung des Batteriestapels (200) abdecken,
wobei die Modulverstärkungsplatte (110, 120) einen Vorsprung aufweist, der mit einer Öffnung in Eingriff steht, die auf einer Modulbefestigungsplatte (730) zum Befestigen des Batteriemoduls (10, 10A) in einer vorbestimmten Position auf einer Platzierungsfläche (710), auf der das Batteriemodul (10, 10A) platziert ist, ausgebildet ist.

2. Batteriemodul (10, 10A) nach Anspruch 1, ferner aufweisend:
eine tafelförmige Komponente, die eine des Paars erster Außenflächen abdeckt, wobei
die Modulverstärkungsplatte (110, 120) an der tafelförmigen Komponente befestigt ist.

3. Batteriemodul (10, 10A) nach Anspruch 2, wobei
der Batteriestapel (200) ein Laminat aus einer Vielzahl von Einheiten ist, die jeweils eine der Zellen (220) und eine tafelförmige Schale (310, 320, 330) aufweisen, an der eine Hauptfläche einer der Zellen (220) befestigt ist, und
die Modulverstärkungsplatte (110, 120) an der tafelförmigen Schale (310, 320, 330) befestigt ist, die auf der anderen des Paars erster Außenflächen angeordnet ist.

4. Batteriemodul (10, 10A) nach Anspruch 2 oder 3, ferner aufweisend:
eine Leiterplatte (400), die an der tafelförmigen Komponente angeordnet ist und einen Eingangs-/Ausgangsanschluss (401) aufweist, der mit einem Elektrodenanschluss jeder der Zellen (220) elektrisch verbunden ist.

5. Batteriemodul (10, 10A) nach einem der Ansprüche 1 bis 4, wobei
die Modulverstärkungsplatte (110, 120) eine erste Verstärkungsplatte (110), welche die zweite Außenfläche abdeckt, und eine zweite Verstärkungsplatte (120), die der zweiten Außenfläche zugewandt ist und im Wesentlichen eine gesamte dritte Außenfläche des Batteriestapels (200) abdeckt, aufweist.

6. Batteriemodul (10, 10A) nach einem der Ansprüche 1 bis 5, wobei
die Modulverstärkungsplatte (110, 120) einen Haken (113, 123) aufweist, der mindestens eine des Paars erster Außenflächen einhakt.

7. Batteriemodul (10, 10A) nach einem der Ansprüche 1 bis 6, wobei
die Modulverstärkungsplatte (110, 120) eine Vielzahl von Durchgangslöchern aufweist, die Abschnitte der zweiten Außenfläche des Batteriestapels (200) freilegen.

8. Batteriemodul (10, 10A) nach einem der Ansprüche 1 bis 7, wobei
die Modulverstärkungsplatte (110, 120) eine zweite Führung aufweist, die eine zweite Nut (112) in oder ein zweiter Vorsprung auf einer Außenfläche ist und sich in einer vorbestimmten Richtung erstreckt, wobei die zweite Nut (112) oder der zweite Vorsprung zu einer ersten Führung (720) passt, die eine erste Rippe oder eine erste Nut ist, die auf der Platzierungsfläche (710) ausgebildet ist und sich in der vorbestimmten Richtung erstreckt.

9. Batteriemodul (10, 10A) nach einem der Ansprüche 1 bis 8, wobei
jede der Zellen (220) einen ersten Anschluss und einen zweiten Anschluss mit einer anderen Polarität als der erste Anschluss aufweist,
der erste Anschluss und der zweite Anschluss an jeder der Zellen (220) jeweils eine erste Platte (221a, 221b), die sich entlang der Hauptfläche einer entsprechenden der Zellen (220) erstreckt, und eine zweite Platte (221b, 222b), die sich im Wesentlichen senkrecht zu der Hauptfläche erstreckt, aufweisen, und
eine Richtung, in der sich die zweite Platte (221b) des ersten Anschlusses in Bezug auf die erste Platte (221a) des ersten Anschlusses erstreckt, und eine Richtung, in der sich die zweite Platte (222b) des zweiten Anschlusses in Bezug auf die erste Platte (222a) des zweiten Anschlusses erstreckt, einander gegenüberliegen.

10. Batteriemodul (10, 10A) nach Anspruch 9, wobei
in einer ersten Zelle (220) und einer zweiten Zelle (220), die benachbart zueinander laminiert sind, von den Zellen (220) die zweite Platte des ersten Anschlusses auf der ersten Zelle (220) und die zweite Platte des zweiten Anschlusses auf der zweiten Zelle (220) miteinander verbunden sind.

11. Stromspeichereinheit (1), aufweisend:
das Batteriemodul (10, 10A) nach einem der Ansprüche 1 bis 10; und
eine Platzierungsfläche (710), auf der das Batteriemodul (10, 10A) platziert ist.

12. Stromspeichereinheit (1) nach Anspruch 11, wobei
das Batteriemodul (10, 10A) das Batteriemodul (10, 10A) nach Anspruch 8 ist, und
die Platzierungsfläche (710) eine Führung (720) aufweist.

13. Stromspeichereinheit (1) nach Anspruch 11 oder 12, wobei
die Stromspeichereinheit (1) ferner die Modulbefestigungsplatte (730) aufweist.

## Revendications

1. Module de batterie (10, 10A), comprenant :
un empilement de batteries (200) comportant des éléments de batterie (220) qui sont tabulaires et stratifiés les uns sur les autres ; et
une plaque de renforcement de module (110, 120) qui est métallique et est disposée dans au moins une position qui recouvre sensiblement la totalité d'une deuxième surface extérieure présentant une zone maximale, la position étant comprise dans des positions, qui recouvrent une pluralité de surfaces extérieures à l'exception d'une paire de premières surfaces extérieures sur les deux côtés extérieurs le long d'une direction de stratification de l'empilement de batteries (200),
dans lequel la plaque de renforcement de module (110, 120) comporte une partie faisant saillie qui vient en prise avec une ouverture formée sur une plaque de fixation de module (730) destinée à fixer le module de batterie (10, 10A) dans une position prédéterminée sur une surface de placement (710) sur laquelle le module de batterie (10, 10A) est placé.

2. Module de batterie (10, 10A) selon la revendication 1, comprenant en outre :
un composant tabulaire qui recouvre une première surface extérieure de la paire de premières surfaces extérieures,
dans lequel la plaque de renforcement de module (110, 120) est fixée au composant tabulaire.

3. Module de batterie (10, 10A) selon la revendication 2, dans lequel
l'empilement de batteries (200) est un stratifié d'une pluralité d'unités comportant chacune un des éléments de batterie (220) et un plateau tabulaire (310, 320, 330) auquel une surface principale d'un des éléments de batterie (220) est fixée, et
la plaque de renforcement de module (110, 120) est fixée au plateau tabulaire (310, 320, 330) disposé sur l'autre première surface extérieure de la paire de premières surfaces extérieures.

4. Module de batterie (10, 10A) selon la revendication 2 ou 3, comprenant en outre :
une carte de circuits imprimés (400) qui est disposée sur le composant tabulaire et comporte une borne entrée-sortie (401) reliée électriquement à une borne d'électrode de chacun des éléments de batterie (220).

5. Module de batterie (10, 10A) selon l'une quelconque des revendications 1 à 4, dans lequel
la plaque de renforcement de module (110, 120) comporte une première plaque de renforcement (110) qui recouvre la deuxième surface extérieure, et une deuxième plaque de renforcement (120) qui fait face à la deuxième surface extérieure et recouvre sensiblement la totalité d'une troisième surface extérieure de l'empilement de batteries (200).

6. Module de batterie (10, 10A) selon l'une quelconque des revendications 1 à 5, dans lequel
la plaque de renforcement de module (110, 120) comporte un crochet (113, 123) qui accroche au moins une première surface extérieure de la paire de premières surfaces extérieures.

7. Module de batterie (10, 10A) selon l'une quelconque des revendications 1 à 6, dans lequel
la plaque de renforcement de module (110, 120) comporte une pluralité de trous traversants qui exposent des parties de la deuxième surface extérieure de l'empilement de batteries (200).

8. Module de batterie (10, 10A) selon l'une quelconque des revendications 1 à 7, dans lequel
la plaque de renforcement de module (110, 120) comporte un deuxième guide qui est une deuxième rainure (112) dans ou une deuxième partie faisant saillie sur une surface extérieure et s'étendant dans une direction prédéterminée, la deuxième rainure (112) ou la deuxième partie faisant saillie s'ajustant au premier guide (720) qui est une première nervure ou une première rainure formée sur la surface de placement (710) et s'étendant dans la direction prédéterminée.

9. Module de batterie (10, 10A) selon l'une quelconque des revendications 1 à 8, dans lequel
chacun des éléments de batterie (220) comporte une première borne et une deuxième borne présentant une polarité différente de la première borne,
la première borne et la deuxième borne sur chacun des éléments de batterie (220) comportent chacune une première plaque (221a, 221b) qui s'étend le long de la surface principale d'un élément de batterie correspondant des éléments de batterie (220), et une deuxième plaque (221b, 222b) qui s'étend de manière sensiblement perpendiculaire à la surface principale, et
une direction dans laquelle la deuxième plaque (221b) de la première borne s'étend par rapport à la première plaque (221a) de la première borne et une direction dans laquelle la deuxième plaque (222b) de la deuxième borne s'étend par rapport à la première plaque (222a) de la deuxième borne sont opposées.

10. Module de batterie (10, 10A) selon la revendication 9, dans lequel
dans un premier élément de batterie (220) et un deuxième élément de batterie (220) qui sont stratifiés de manière adjacente l'un à l'autre parmi les éléments de batterie (220), la deuxième plaque de la première borne sur le premier élément de batterie (220) et la deuxième plaque de la deuxième borne sur le deuxième élément de batterie (220) sont mutuellement reliées.

11. Unité de stockage d'électricité (1), comprenant :
le module de batterie (10, 10A) selon l'une quelconque des revendications 1 à 10 ; et
une surface de placement (710) sur laquelle le module de batterie (10, 10A) est placé.

12. Unité de stockage d'électricité (1) selon la revendication 11, dans laquelle
le module de batterie (10, 10A) est le module de batterie (10, 10A) selon la revendication 8, et
la surface de placement (710) comporte un guide (720).

13. Unité de stockage d'électricité (1) selon la revendication 11 ou 12, dans laquelle
l'unité de stockage d'électricité (1) comprend en outre la plaque de fixation de module (730).
